**Europäisches Patentamt**

(19) **European Patent Office**

**Office européen des brevets**

(11) Numéro de publication: **0 027 422**
**B1**

(12) **FASCICULE DE BREVET EUROPEEN**

(45) Date de publication du fascicule du brevet:
**16.05.84**

(51) Int. Cl.³: **F 16 K 1/226**

(21) Numéro de dépôt: **80401458.7**

(22) Date de dépôt: **10.10.80**

(54) Joint d'étanchéité pour obturateur tel qu'un registre de ventilation.

(30) Priorité: **11.10.79 FR 7925365**

(43) Date de publication de la demande:
**22.04.81 Bulletin 81/16**

(45) Mention de la délivrance du brevet:
**16.05.84 Bulletin 84/20**

(84) Etats contractants désignés:
**BE DE GB IT LU NL SE**

(56) Documents cités:
**AU - B - 496 441**
**FR - A - 1 364 960**
**FR - A - 2 305 663**
**US - A - 3 226 780**
**US - A - 3 388 502**

(73) Titulaire: **APPLICATIONS MECANIQUES ET ROBINETTERIE INDUSTRIELLE A.M.R.I. Société anonyme dite:, Les Mercuriales 40, rue Jean Jaurès, F-93176 Bagnolet Cedex (FR)**

(72) Inventeur: **Garrigues, Jean-Claude, Buziet, F-64680 Ogeu-les-Bains (FR)**

(74) Mandataire: **Marquer, Francis et al, 35, Avenue Victor Hugo Résidence Chamfleury, F-78180 Voisins-le-Bretonneux (FR)**

BUNDESDRUCKEREI BERLIN

Joint d'étanchéité pour obturateur tel qu'un registre de ventilation

La présente invention concerne un joint d'étanchéité utilisable pour un registre de ventilation, par exemple du type de ceux pouvant servir au sectionnement, dans des circuits de ventilation, de réfrigération d'air fonctionnant à basse pression.

On sait que, d'une manière générale, un tel registre de ventilation comprend un cadre en tôle mécanosoudée à l'intérieur duquel est monté pivotant un volet. En raison du taux important de fuites toléré dans les applications dont font habituellement l'objet ces registres, l'étanchéité »relative« est obtenue par contact métal-métal du volet sur le cadre, l'obturation étant obtenue par rotation quart de tour à partir de la position ouverte et inversement.

Il s'avère actuellement que, dans de nombreux types d'application, l'étanchéité de ces registres est jugée insuffisante, notamment mais non exclusivement, pour des raisons de sécurité.

Ceci est en particulier le cas pour les installations de ventilation utilisées dans les centrales nucléaires. Il est en effet indispensable, dans le cas d'une contamination accidentelle du flux d'air véhiculé, de fermer hermétiquement les volets de manière à circonscrire la contamination, ce qui n'est guère possible avec les volets actuellement utilisés.

L'invention a donc pour but d'améliorer l'étanchéité de ces registres, de manière à ce qu'ils soient totalement étanches pour les pressions de service rencontrées. Elle propose donc à cet effect, une étanchéité obtenue par déformation (compression) d'un joint élastomère composite par un volet de préférence métallique.

Par le brevet US-A-3 226 780 on connaît un joint destiné à assurer l'étanchéité d'une porte coulissante de véhicules tels que des wagons de chemin de fer. Ce joint qui vient se monter sur une paroi perpendiculaire à l'axe de l'ouverture que l'on désire refermer fait intervenir:

— Une armature consistant en un profilé sensiblement en forme de $\Omega$ fixé par son âme centrale sur ladite paroi et qui présente une concavité orientée parallèlement à l'axe de l'ouverture, et
— un revêtement en forme de C qui s'étend au-dessus de la concavité et qui comprend des nervurations destinées à assurer l'étanchéité avec la porte, ce profilé venant en retour sur les ailes latérales de l'armature.

Dans ce dispositif, lors de la fermeture, la porte vient coulisser sur le joint parallèlement à ladite paroi et l'étanchéité est obtenue principalement grâce auxdites nervurations.

Il est clair qu'une telle technique est difficilement transposable dans le domaine des registres d'étanchéité à volet pivotant et en particulier, ceux utilisés dans des centrales nucléaires. En outre le principe de l'étanchéité obtenue est totalement différente de celle d'un registre à volet pivotant.

On connaît également, par le brevet FR-A-2 305 663 un robinet à papillon à axe décalé par rapport à son axe d'entraînement. Ce robinet fait intervenir une garniture d'étanchéité de structure complexe, comprenant une bride de forme sophistiquée qui vient s'assembler latéralement sur le corps de la vanne au moyen de goujons parallèles à l'axe de l'alésage de passage du robinet. Du côté où vient porter le papillon, cette bride se trouve recouverte par une garniture qui vient s'ancrer dans des gorges prévuies à cet effet dans la bride. Cette garniture se trouve en outre comprimée, du côté de sa bordure périphérique interne, par un premier joint torique. Cette bride comprend en outre une gorge dans laquelle se trouve logé un deuxième joint torique.

Il apparaît donc qu'en raison de la complexité d'un tel dispositif d'étanchéité, de la nature de ses composants et de son type de montage, il est difficilement concevable d'utiliser ce dispositif dans un registre de ventilation habituellement réalisé en tôle mécanosoudée.

Par ailleurs, on connaît en outre, par le brevet AU-B-496 441 un obturateur à papillon pour conduit à gaz faisant intervenir un système d'étanchéité trés particulier, à savoir, un systeme à joint gonflable. Un tel système présente la particularité qu'il faut dégonfler le joint pendant la manoeuvre d'ouverture et de fermeture et qu'on le gonfle en position fermée du papillon pour assurer l'étanchéité. L'obturateur décrit dans ce brevet présente une structure relativement simple. Toutefois, il fait nécessairement appel à des appareils annexes tel que des circuits pneumatiques pour le gonflage ou le dégonflage du joint. En conséquence, il ne convient pas à la réalisation de registre de ventilation du type de ceux dont il est question dans le présant brevet.

En effet, l'invention a plus particulièrement pour but la rélisation d'un joint d'étanchéité pour registres de ventilation faisant appel à des techniques relativement simples; mais qui permettent cependant de garantir une bonne étanchéité, en rapport de son domaine d'utilisation, qui soit comptabile avec la technologie du registre.

Pour parvenir à ces résultats, l'invention propose un joint d'étanchéité pour un registre de ventilation, ce registre comprenant un cadre tubulaire pouvant se monter sur une gaine de ventilation, un volet obturateur monté pivotant dans le cadre au moyen d'au moins un axe décalé par rapport au plan du volet, ledit joint d'étanchéité étant continu et sa forme permettant l'engagement de la tranche du volet d'un côté comme de l'autre, lors des manoeuvres d'ouverture et de la fermeture du registre, ledit joint comprenant une armature consistant en un profilé présentant une concavité centrale bordée de deux ailes latérales définissant une forms en Ω, et un revêtement sensiblement en forme de C, réalisé en un matériau présentant une bonne résistance à l'usure et un faible coefficient de frottement, ledit revêtement s'étendant au-dessus de la concavité de ladite armature et venant en retour sur ses ailes latérales.

Ce joint est plus particulièrement caractérisé en ce que l'âme centrale de ladite armature vient se fixer sur la paroi interne tubulaire du cadre de registre:

— ledit joint loge un sommier élastique sur lequel vient s'appliquer la partie centrale du revêtement;
— les parties du revêtement venant en retour sur les ailes de l'armature présentent au moins une lèvre autoclave destinée à permettre une étanchéité statique entre le revêtement et le cadre du registre.

Selon d'autres caractéristiques de l'invention, le revêtement peut être réalisé en élastomère à haut module d'élasticité et le sommier élstique en élstomère à bas module d'élsticité. Dans ce cas, le sommier peut remplir la concavité de l'armature et présenter une surface libre bombée sur laquelle vient en appui le revêtement.

Le sommier élstique peut également consister en un ressort spiralé en plastomère ou en métal.

L'invention concerne également un registre de ventilation équipé dudit joint.

Un tel registre comprend donc:

— un cadre de surface interne cylindrique pouvant se monter sur une gaine de ventilation par exemple par bridage;
— un volet obturateur monté pivotant dans le cadre au moyen d'au moins un axe décalé par rapport au plan du volet;
— un joint d'étanchéité continue du type de ceux précédemment décrits et dont l'armature vient se fixer sur ledit cadre, sensiblement dans le plan d'étanchéité du registre.

Ce registre peut présenter la forme de la gaine sur laquelle il vient se monter. Par conséquent, il peut par exemple présenter une forme carrée, rectangulaire ou même circulaire.

Le susdit volet peut être entièrement métallique. La tranche peut alors être protégée soit par un rechargement électrique, soit par un revêtement inoxydable pouvant se présenter sous la forme d'un profilé, soit par tout autre moyen.

Des modes de réalisation de l'invention seront décrits ci-après à titre d'exemple non limitatifs, avec référence aux dessins annexés dans lesquels:

Les fig. 1 à 6 représentent, en vue de côté et en vue de dessus, un registre de forme carrée (fig. 1 et 2), un registre de forme rectangulaire (fig. 3 et 4) et un registre de forme circulaire (fig. 5 et 6);

Les fig. 7 et 8 représentent respectivement en coupes transversale et axiale un registre de forme rectangulaire;

Les fig. 9 et 10 représentent, en coupe partielle, un cadre de registre équipé d'un joint à sommier en élastomère (fig. 9) et à sommier en ressort spiralé (fig. 10);

Les fig. 11 à 14 représentent des tranches de volet protégées par des dépôts inoxydables.

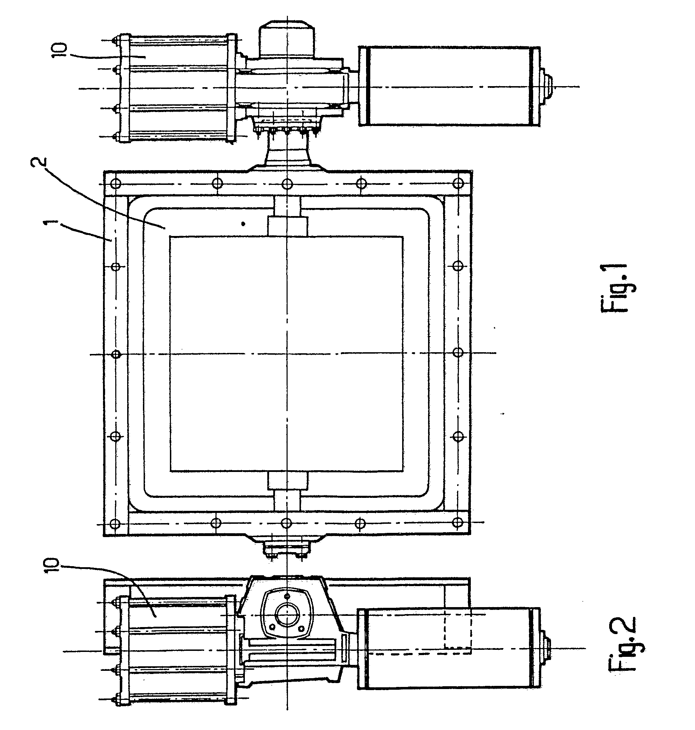

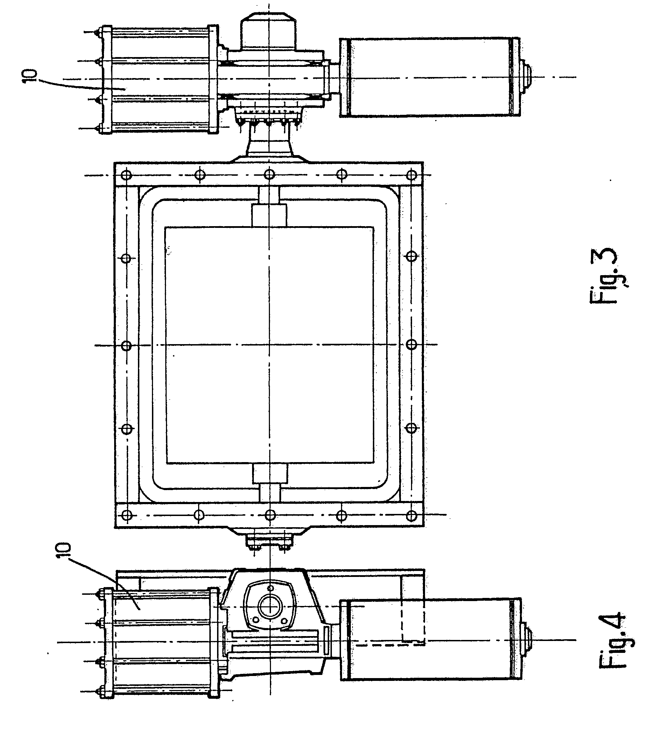

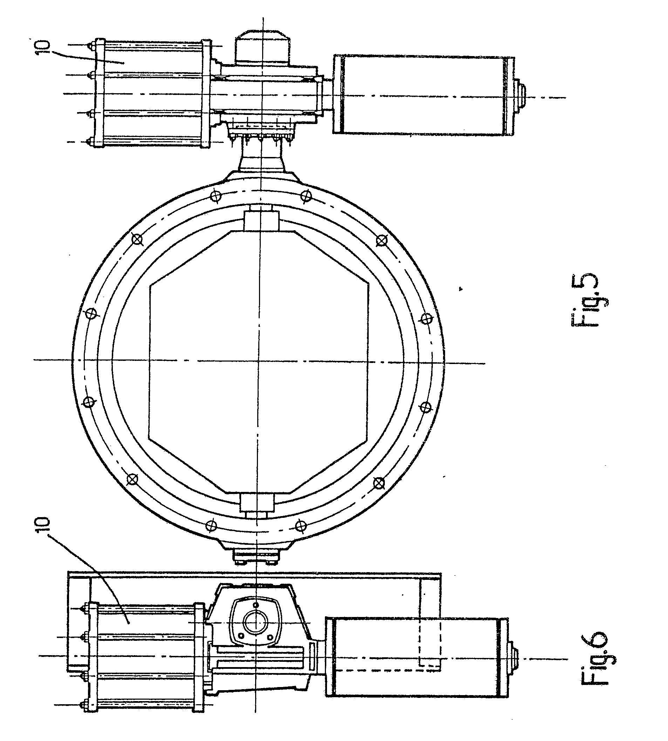

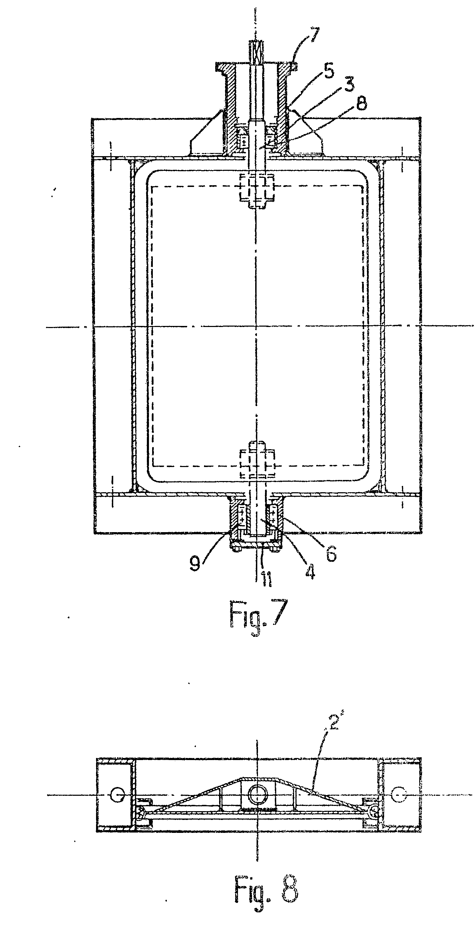

Avec référence aux fig. 1 à 8, les registres, quelle que soit leur forme (carrée, fig. 1 et 2, rectangulaire, fig. 3 et 4, circulaires, fig. 5 et 6) comprennent un cadre de surface interne cylindrique mécanosoudée 1 de section en forme de U dans lequel est monté pivotant un volet 2, de forme correspondante, au moyen de deux demi-axes 3 et 4 dont l'un (axe 3) est un axe d'entraînement, et de deux moyeux respectife 5 et 6. Le moyeu de l'axe d'entraînement, est équipé d'une platine de fixation 7 pour l'appareil de manoeuvre.

Le volet 2, réalisé en tôle mécanosoudée, comprend plus particulièrement une tôle d'obturation renforcée (renforts 2'). Sur ledit volet sont montés, décalés par rapport au plan d'étanchéité, les deux demi-axes de rotation 3, 4. Ces derniers sont montés sur roulements 8, 9 dans les moyeux 5, 6 dudit cadre. Dans l'exemple représenté fig. 1 à 6, le demi-axe d'entraînement 3 se trouve entraîné par un actionneur 10 de type classique et qui ne sera donc pas décrit en détail.

Le moyeu 6 relatif au demi-axe 4 est protégé par un couvercle 11 rendu étanche par exemple grâce à des joints toriques.

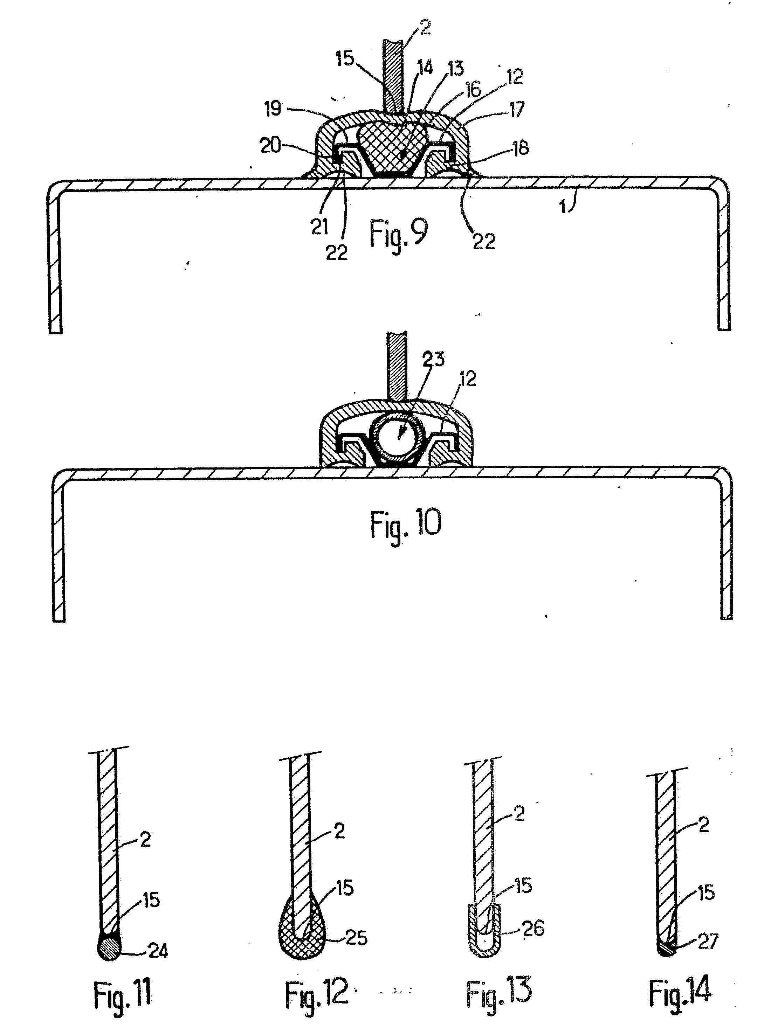

Comme on peut le voir sur les fig. 9 et 10, l'armature 12 du joint selon l'invention vient se fixer, par exemple par soudure par points, sur le cadre 1, sensiblement dans le plan d'étanchéité du registre, qui se trouve, comme précédemment mentionné, décalé par rapport aux demi-axes 3, 4.

On notera que pour les registres de section carrée ou rectangulaire, la forme interne de ce cadre 1 et, en conséquence, de l'ensemble du joint, est arrondie dans les angles.

Cette armature 12 qui est réalisée à l'aide d'un profilé en Ω inversé reçoit, dans sa concavité 13, un sommier 14, en élastomère à bas module d'élasticité, destiné à assurer l'élasticité ou la restitution du siège lors de la pénétration ou le retrait de la tranche 15 du volet 12. Dans l'exemple représenté fig. 9, le sommier 14 remplit la concavité 13 de l'armature 12 et présente une face supérieure 16 bombée au repos.

L'ensemble constitué par l'armature 12 et le sommier 14 se trouve recouvert par un revêtement élastomère 17 à haut module, en forme de C renversé, dont les bords latéraux 18 viennent en retour sous les ailes latérales 19 de l'armature 12. Cette dernière disposition permet de réaliser l'accrochage du revêtement 17 sur l'armature 12. Cet accrochage se trouve renforcé grâce au fait que les ailes 19 de l'armature sont prolongées par un léger repli 20 qui vient s'engager, par encliquetage, dans des gorges latérales 21 correspondantes de la partie en retour 18 du revêtement 17.

L'étanchéité statique, entre le revêtement 17 et le cadre 1, est assurée en prévoyant, dans les parties du revêtement 17 venant en retour sur les ailes 19 du profilé et qui viennent porter sur le cadre 1, des lèvres autoclaves 22.

On notera que l'élstomère utilisé pour la réalisation du revêtement 17 doit en outre présenter une bonne résistance mécanique (frottement, usure) au contact de la tranche 15 du volet 2.

Par ailleurs, le réglage axial du volet 2, par rapport au siège précédemment décrit, s'effectue par translation de l'axe 4 dans le roulement 9 logé dans le moyeu 6.

L'invention ne se limite pas au type de sommier représenté fig. 9. Il pourrait consister par exemple en un ressort spiralé 23 en plastomère ou en métal (fig. 10).

Le fonctionnement des registres précédemment décrits est très voisin de celui d'une vanne-papillon classique. D'une façon analogue, la manoeuvre complète du volet, de l'ouverture à la fermeture, correspond à une rotation complète de 90° autour des axes. De même, l'étanchéité amont-aval est obtenue en fin de fermeture, par une compression continue de la tranche de volet sur le siège et dont le type peut varier selon la position de la tranche 15 du volet 2, par rapport à son axe de rotation (demiaxes 3, 4). Cette action se traduit, en tout état de cause, d'une part, en une pénétration de la tranche 15 du volet 2 dans le siège, parallèle à l'axe de rotation et, d'autre part, en un glissement de la tranche 15 sur le siège, perpendiculaire audit axe de rotation.

A cet effet, la conception du revêtement 17 est telle que sa forme extérieure permet un engagement progressif dans un sens comme dans l'autre de la tranche 15 du volet 2, tandis que sa souplesse permet d'absorber, sans augmentation notable de la compression et donc du frottement, les écarts dimensionnels dus à une construction en tôlerie mécanosoudée.

Avec référence aux fig. 11, 12, 13 et 14, la tranche 15 du volet 2 peut être protégée par un dépôt inoxydable pouvant consister:

— en un rond 24 en acier inoxydable soudé sur la périphérie du volet 2 (fig. 11);
— en un profilé 25 en plastomère collé sur la périphérie du volet 2 (fig. 12);
— en un profilé 26 en acier inoxydable fixé par soudure continue ou par collage sur la périphérie du volet 2 (fig. 13);
— en un rechargement 27 en acier inoxydable réalisé sur la tranche du volet 2 (fig. 14).

## Revendications

1. Joint d'étanchéité pour un registre de ventilation, ce registre comprenant un cadre tubulaire (1) pouvant se monter sur une gaine de ventilation, un volet obturateur (2) monté pivotant dans le cadre (1) au moyen d'au moins un axe (3, 4) décalé par rapport au plan du volet (2), ledit joint d'étanchéité étant continu et sa forme permettant l'engagement de la tranche du volet (2) d'un côté comme de l'autre, lors des manoeuvres d'ouverture et de la fermeture du registre, ledit joint comprenant une armature (12) consistant en un profilé présentant une concavité (13) centrale bordée de deux ailes latérales (19) définissant une forme en Ω, et un revêtement (17) sensiblement en forme de C, réalisé en un matériau présentant une bonne résistance à l'usure et un faible coefficient de frottement, ledit revêtement (17) s'étendant au-dessus de la concavité (13) de ladite armature (12) et venant en retour sur ses ailes latérales (19), caractérisé en ce que:

— l'âme centrale de ladite armature (12) vient se fixer sur la paroi interne tubulaire du cadre (1) du registre;
— ledit joint loge un sommier élastique (14) sur lequel vient s'appliquer la partie centrale du revêtement (17);
— les parties du revêtement (17) venant en retour sur les ailes (19) de l'armature (12) présentent au moins une lèvre autoclave (22) destinée à permettre une étanchéité statique entre le revêtement (17) et le cadre (1) du registre.

2. Joint d'étanchéité selon la revendication 1, caractérisé en ce que le revêtement (17) est réalisé en élstomère à haut module d'élasticité et le sommier élastique (14) en élastomère à bas module d'élasticité.

3. Joint d'étanchéité selon la revendication 2, caractérisé en ce que le sommier (14) peut remplir la concavité (13) de l'armature (12) et présenter une surface libre bombée (16) sur laquelle vient en appui le revêtement (17).

4. Joint d'étanchéité selon la revendication 1, caractérisé en ce que le sommier (14) sonsiste en un ressort spiralé (23) en plastomère ou en métal.

5. Registre de ventilation qui comprend:

— un cadre (1) pouvant se monter sur une gaine de ventilation, par exemple par bridage;
— un volet obturateur (2) monté pivotant dans le cadre (1) au moyen d'au moins un axe (3, 4) décalé par rapport au plan du volet (2);
— un joint d'étanchéité continue dont la forme permet l'engagement du volet (2) d'un côté comme de l'autre et dont l'armature (12) vient se fixer sur ledit cadre (1), sensiblement dans le plan d'étanchéité du registre, ledit registre étant caractérisé en ce que ledit joint d'étanchéité est construit selon l'une des revendications précédentes.

## Patentansprüche

1. Dichtung für eine Lüftungsklappe, die einen Rohrrahmen (1), der auf einer Lüftungsrohrleitung montiert werden kann und einen Verschlußschieber (2) aufweist, der im Rahmen (1) mittels zumindest einer gegenüber der Ebene des Verschlußschiebers (2) versetzten Achse (3, 4) schwenkbar eingesetzt ist, wobei die Dichtung kontinuierlich und in ihrer Form so ausgebildet ist, daß ein Eingreifen der Kante des Verschlußschiebers (2) von der einen wie der anderen Seite beim Öffnen und Schließen der Lüftungsklappe ermöglicht wird, und die eine Bewehrung (12) bestehend aus einem Profileisen, das eine von zwei, eine Ω-Form bestimmenden Seitenflügeln (19) mittig eingefaßte Aushöhlung (13) besitzt, sowie eine Verkleidung (17) aufweist, die allgemein die Form eines C's hat, aus einem Werkstoff gefertigt ist, der eine günstige Abnutzungsfestigkeit sowie einen niedrigen Reibungskoeffizienten besitzt, und die sich über die Aushöhlung (13) der Bewehrung (12) erstreckt und über die Seitenflügel (19) rücklaufend übergreift, dadurch gekennzeichnet, daß

—   der Mittelsteg der Bewehrung (12) sich an die Rohrrinnenwand des Rahmens (1) der Lüftungsklappe anlegt;
—   die Dichtung einen elastischen Holm (14) aufnimmt, an den sich der mittlere Teil der Verkleidung (17) anlegt;
—   die Teile der Verkleidung (17), die über die Flügel (19) der Bewehrung (12) rücklaufend übergreifen, zumindest eine Autoklavlippe (22) aufweisen, durch die eine statische Dichtheit zwischen der Verkleidung (17) und dem Rahmen (1) der Lüftungsklappe erreicht wird.

2. Dichtung nach Anspruch 1, dadurch gekennzeichnet, daß die Verkleidung (17) aus einem Elastomer mit hohem Elastizitätsmodul und der elastische Holm (4) aus einem Elastomer mit niedrigem Elastizitätsmodul gefertigt sind.

3. Dichtung nach Anspruch 2, dadurch gekennzeichnet, daß der Holm (14) die Aushöhlung (13) der Bewehrung (12) ausfüllen und eine freie bauchige Fläche (16) bilden kann, an die sich die Verkleidung (17) anlegt.

4. Dichtung nach Anspruch 1, dadurch gekennzeichnet, daß der Holm (14) aus einer Spiralfeder (23) aus Plastomer oder Metall besteht.

5. Lüftungsklappe mit

—   einem Rahmen (1), der auf eine Lüftungsrohrleitung beispielshalber durch Flanschen montiert werden kann;
—   einem Verschlußschieber (2), der mittels zumindest einer gegenüber der Ebene des Verschlußschiebers (2) versetzten Achse (3, 4) schwenkbar im Rahmen (1) eingesetzt ist; und
—   einer kontinuierlich ausgebildeten Dichtung, durch deren Form der Eingriff des Verschlußschiebers (2) von der einen wie der anderen Seite möglich ist und deren Bewehrung (12) am Rahmen (1) befestigt ist, und zwar allgemein in der Dichtungsebene der Lüftungsklappe, die dadurch gekennzeichnet ist, daß die Dichtung nach einem der vorhergehenden Ansprüche ausgebildet ist.

**Claims**

1. Seal for a ventilation shutter, this shutter comprising a tubular frame (1) mountable in a ventilation duct, a closure flap (2) pivotably mounted in the frame (1) by means of at least one shaft (3, 4) offset with respect to the plane of the flap (2), said seal being continuous and its form allowing engagement of the edge of the flap (2) from one side as well as from the other, during opening and closing operation of the shutter, said seal comprising an armature (12) consisting of a profiled section having a central concavity (13) bordered by two lateral flanges (19) defining a Ω shape and a covering (17) substantially in the form of a C, made from a material having good wear resistance and low friction ceofficient, said covering (17) extending above the concavity (13) of said armature (12) and returning over its lateral flanges (19), characterized in that:

—   the central web of said armature (12) is fixed to the tubular internal wall of the frame (1) of the shutter,
—   said seal houses an elastic bolster (14) on which the central part of the covering (17) is applied,
—   the parts of the covering (17) returning over the flanges (19) of the armature (12) have at least one autoclave lip (22) for allowing static sealing between the covering (17) and the frame (1) of the shutter.

2. Seal according to claim 1, characterized in that the covering (17) ist made from elastomer with high elasticity modulus and the elastic bolster (14) from an elastomer with low elasticity modulus.

3. Seal according to claim 2, characterized in that the bolster (14) may fill the concavity (13) of the armature (12) and have a free bulging surface (16) on which the covering (17) comes to bear.

4. Seal according to claim 1, characterized in that the bolster (14) consists of a spiralled spring (23) made from plastomer of metal.

5. A ventilation shutter which comprises:

—   a frame (1) mountable in a ventilation duct, for example by clamping;
—   a closure flap (2) pivotably mounted in the frame (1) by means of at least one shaft (3, 4) offset with respect to the plane of the flap (2);
—   a continuous seal whose shape allows engagement of the flap (2) from one side as well as from the other and whose armature (12) is fixed to said frame (1), substantially in the sealing plane of the shutter, said shutter being characterized in that said seal is constructed according to one of the preceding claims.

0 027 422

Fig.2    Fig.1

Fig.3

Fig.4

Fig.5

Fig.6

Fig. 7

Fig. 8

Fig. 9

Fig. 10

Fig. 11    Fig. 12    Fig. 13    Fig. 14